# EUROPÄISCHE PATENTSCHRIFT

(11) **EP 1 058 126 B1**
(45) Veröffentlichungstag und Bekanntmachung des Hinweises auf die Patenterteilung: **02.11.2005**
(21) Anmeldenummer: 00110751.5
(22) Anmeldetag: 19.05.2000
(51) Int. Cl.: G01S 17/02, G01S 15/93, G01S 7/54

(54) **Abstandserfassungsvorrichtung**
Distance detection device
Dispositif de détection à distance

(30) Priorität: 29.05.1999 DE 19924755
(43) Veröffentlichungstag der Anmeldung: 06.12.2000
(73) Patentinhaber: ROBERT BOSCH GMBH, 70442 Stuttgart (DE)
(72) Erfinder: Nass, Thilo, 71277 Rutesheim (DE)

(56) Entgegenhaltungen:
- US-A- 4 713 665
- US-A- 4 893 287
- US-A- 5 239 515
- US-A- 5 867 800

## Beschreibung

### STAND DER TECHNIK

Die vorliegende Erfindung betrifft eine Abstandserfassungsvorrichtung zur Erfassung des Abstands von Objekten anhand von Wellensignalen, die von der Abstandserfassungsvorrichtung emittiert und von den Objekten reflektiert werden.

Obwohl auf beliebige Abstandserfassungsvorrichtungen anwendbar, werden die vorliegende Erfindung sowie die ihr zugrundeliegende Problematik in bezug auf eine an einem Stoßfänger eines Kraftfahrzeuges angebrachte Abstandserfassungsvorrichtung, welche Ultraschallechos zur Abstandserfassung verwendet, erläutert.

Allgemein sind Abstandserfassungsvorrichtungen zur kontaktlosen Abstandserfassung als Einparkhilfen für Kraftfahrzeuge, insbesondere ein mehrkanaliges Meßsystem auf Ultraschallbasis, bekannt. Solche Abstandsmessungen basieren auf Ultraschallmessungen nach dem Puls-Echoverfahren und haben in der Regel mindestens zwei im Stoßfänger des Kraftfahrzeuges integrierte Sende/Empfangseinrichtungen.

Die eigentliche Abstandsmessung erfolgt hierbei durch die Auswertung der Laufzeiten der Direktechos (d.h. die Sendeeinheit ist gleichzeitig die Empfangseinheit) und der Kreuzechos (d.h. eine Einheit ist die Sendeeinheit und ein oder mehrere benachbarte Einheiten sind die Empfangseinheiten).

Ein akustisches Übersprechen von Ultraschallsignalen entlang des Stoßfängers (Körperschall/Luftschall) wird bei der Auswertung der Signale ausgefiltert, um eine Verwechslung mit tatsächlich vorhandenen Echosignalen auszuschließen. Mit anderen Worten werden in der jeweiligen Empfangscharakteristik Totzeitfenster entsprechend den Übersprechsignalen eingeführt, in denen für einen bestimmten Echomodus (d.h. eine bestimmte Sender/Empfänger-Kombination) keine Auswertung stattfinden kann.

Eine starke Verschmutzung des Stoßfängers, beispielsweise durch Schnee, Eis, Schmutz usw., und damit der schwingungsfähigen Membranen der Ultraschallsender bzw. -emfänger führt zu einer zunehmenden Erblindung des Gesamtsystems, ohne jedoch die jeweilige Sensor-Einzelcharakteristik nachhaltig zu beeinflussen.

Somit sind die bekannten Systeme unzuverlässig, denn es besteht die Gefahr, daß der Fahrer eine zunehmende oder bereits erfolgte Erblindung des Gesamtsystems erst zu spät oder überhaupt nicht bemerkt.

### VORTEILE DER ERFINDUNG

Die erfindungsgemäße Abstandserfassungsvorrichtung mit den Merkmalen des Anspruchs 1 weist gegenüber den bekannten Lösungsansätzen den Vorteil auf, daß sie ermöglicht, eine starke Verschmutzung der Membran der Sende/ Empfangseinrichtung frühzeitig zu erkennen und den Fahrer rechtzeitig vor einem Systemausfall, bedingt durch Erblindung, zu warnen.

Die der vorliegenden Erfindung zugrundeliegende Idee besteht darin, sich das Übersprechen, das eigentlich ein ungewolltes Störsignal ist, zur Erfassung der Verschmutzung zunutze zu machen. Insbesondere wird ausgenutzt, daß die Intensität des Übersprechens bei zunehmender Erblindung, d.h. Ansammlung von Schnee, Eis, Schmutz usw. abnimmt.

Durch eine Bewertung charakteristischer Parameter der beispielsweise akustischen Übersprechssignale kann eine Störung festgestellt werden. Dieser ansonsten unerwünschte Nebeneffekt - derartige Signale müssen im Normalbetrieb ausgefiltert werden, um eine Verwechslung mit tatsächlich vorhandenen Echosignalen auszuschließen - kann nutzbringend dazu verwendet werden, die Zuverlässigkeit des Systems zu erhöhen.

In den Unteransprüchen finden sich vorteilhafte Weiterbildungen und Verbesserungen der in Anspruch 1 angegebenen Abstandserfassungsvorrichtung.

Gemäß einer bevorzugten Weiterbildung ist die Störungsbestimmungseinrichtung derart gestaltet, daß sie die Intensität bzw. Häufigkeit der in der zweiten Einheit empfangenen Übersprechsignale ermittelt. Unterschreitet diese eine vorbestimmte Schwelle, so läßt sich daraus unter geeigneter Einbeziehung der anderen am Gesamtsystem beteiligten Einheiten ein Störungskriterium ableiten. So läßt sich ein einfaches Störungskriterium aufstellen.

Gemäß einer weiteren bevorzugten Weiterbildung ist zum Warnen des Benutzers vor einer bestimmten Störung eine Warnvorrichtung vorgesehen. So kann der Benutzer beispielsweise durch eine visuelle oder akustische Anzeige darüber informiert werden, daß sein System nicht mehr zuverlässig funktioniert.

Gemäß einer weiteren bevorzugten Weiterbildung weist die Sende/Empfangseinrichtung eine dritte, von der ersten und zweiten räumlich beabstandete Sende- und/oder Empfangseinheit mit zumindest einer Sendefunktion auf. Die drei Einheiten sind derart gestaltet, daß die zweite Einheit die von der ersten und dritten Einheit emittierten Wellensignale gleichzeitig als Übersprechsignale empfangen kann. Im einfachsten Fall heißt dies, daß die erste und die dritte Einheit gleiche räumliche Abstände zur zweiten Einheit aufweisen.

Gemäß einer weiteren bevorzugten Weiterbildung weisen die erste und die dritte Einheit unterschiedliche räumliche Abstände zur zweiten Einheit auf, und daher ist eine Koordinationseinrichtung vorhanden, welche derart gestaltet ist, daß sie die Sendefunktion der ersten und dritten Einheit zeitlich so koordiniert, daß die Übersprechsignale gleichzeitig bei der zweiten Einheit eintreffen. Dadurch erreicht man eine Verstärkung der Übersprechsignale und somit ein besseres Signal/Rausch-Verhältnis.

Gemäß einer weiteren bevorzugten Weiterbildung sind die Wellen Ultraschallwellen.

### ZEICHNUNGEN

Ausführungsbeispiele der Erfindung sind in den Zeichnungen dargestellt und in der nachfolgenden Beschreibung näher erläutert.

Es zeigen:
- Fig. 1: eine schematische Darstellung des allgemeinen Aufbaus einer Ultraschall-Abstandserfassungsvorrichtung als Ausführungsform der vorliegenden Erfindung;
- Fig. 2: eine schematische Darstellung der Ultraschall-Abstandserfassungsvorrichtung nach Fig. 1 in einem normalen Meßmodus;
- Fig. 3: eine schematische Darstellung der Ultraschall-Abstandserfassungsvorrichtung nach Fig. 1 in einem ersten Beispiel für einen Prüfmodus;
- Fig. 4: eine schematische Darstellung der Ultraschall-Abstandserfassungsvorrichtung nach Fig. 1 in einem zweiten Beispiel für einen Prüfmodus; und
- Fig. 5: ein Intensitäts/Zeitdiagramm für Echo-Signale der Ultraschall-Abstandserfassungsvorrichtung nach Fig. 1 im normalen Meßmodus und im ersten Prüfmodus.

### BESCHREIBUNG DER AUSFÜHRUNGSBEISPIELE

In den Figuren bezeichnen gleiche Bezugszeichen gleiche oder funktionsgleiche Komponenten.

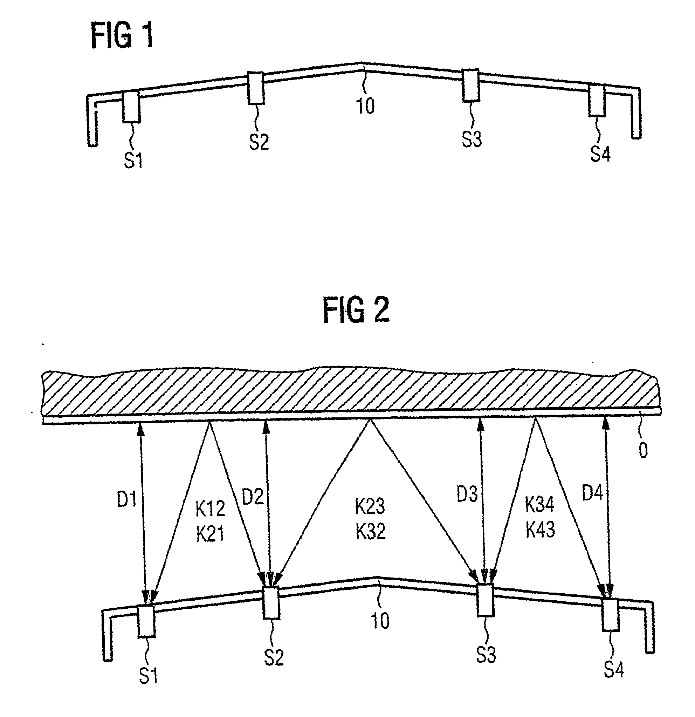

Fig. 1 zeigt eine schematische Darstellung des allgemeinen Aufbaus einer Ultraschall-Abstandserfassungsvorrichtung als Ausführungsform der vorliegenden Erfindung.

In den Figuren ist ein Ultraschallsystem bestehend aus vier Sende/Empfangseinheiten bzw. Sensoren S1 bis S4, die in dem Stoßfänger 10 eines Kraftfahrzeuges integriert sind, dargestellt.

Aus Vereinfachungsgründen nicht in den Figuren dargestellt ist die Ansteuer- und Auswerteelektronik, welche im Stand der Technik an sich bekannt ist.

Fig. 2 zeigt eine schematische Darstellung der Ultraschall-Abstandserfassungsvorrichtung nach Fig. 1 in einem normalen Meßmodus.

Das im normalen Funktionsbetrieb zur Anwendung kommende Puls-Echo-Verfahren mit Direktechos Di, i=1-4 und Kreuzechos Kij, i,j=1-4 ist in Fig. 2 dargestellt. Beim vorliegenden Beispiel wird davon ausgegangen, daß alle Sensoren S1, S2, S3, S4 eine Sende- und eine Empfangsfunktion aufweisen. Dies ist jedoch nicht zwingend erforderlich.

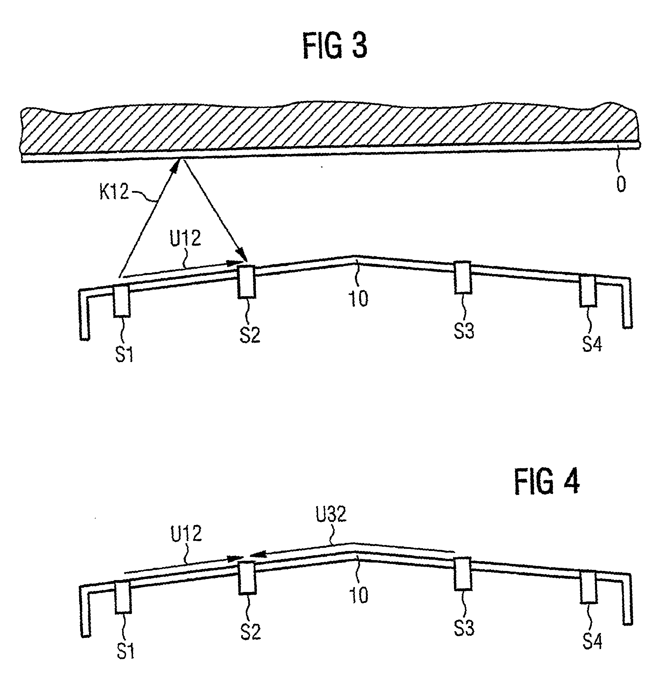

Fig. 3 zeigt eine schematische Darstellung der Ultraschall-Abstandserfassungsvorrichtung nach Fig. 1 in einem ersten Beispiel für einen Prüfmodus.

Dieses Beispiel wird anhand des ersten und zweiten Sensors bzw. der Sende/Empfangseinheit S1, S2 erläutert.

Die beiden Einheiten S1, S2 sind so angeordnet, daß die zweite Einheit S2 die von der ersten Einheit S1 emittierten Wellensignale als Übersprechsignale U12 und als Reflexionssignale, d.h. Kreuzechos K12 empfangen kann.

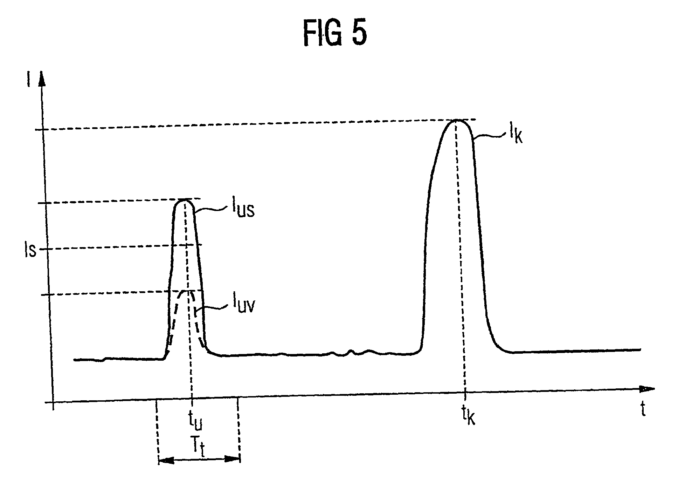

Fig. 5 zeigt ein Intensitäts/Zeitdiagramm für Echo-Signale dieser Ultraschall-Abstandserfassungsvorrichtung im normalen Meßmodus und im ersten Prüfmodus.

Zur Zeit t_{U} werden Übersprechsignale im zweiten Sensor S2 empfangen und durch das Totzeitfenster Tₜ im normalen Meßmodus ausgeblendet. In diesem normalen Meßmodus sind lediglich die Signale der Kreuzechos K12 mit der Intensität I_{K} zur Zeit t_{K} von Interesse, um daraus den Abstand zum Objekt O durch Triangulation zu erfassen.

Im ersten Prüfmodus, der zum Beispiel in bestimmten Intervallen oder beim Fahren auf freier Strecke aktiviert wird, wird ermittelt, ob das System erblindet ist oder nicht.

Dazu ermittelt eine nicht gezeigte Störungsbestimmungseinrichtung in der Elektronik die Intensität des Übersprechsignals U12 zur Zeit t_{U}. Die Störungsbestimmungseinrichtung ist in diesem Beispiel derart gestaltet, daß sie eine Störung bestimmt, wenn die ermittelte Intensität eine vorbestimmte Schwelle, hier I_{S}, unterschreitet. Als Beispiel für ein ungestörtes System ist in Fig. 5 die Intensität I_{US} angegeben und als Beispiel für ein gestörtes System die Intensität I_{UV}.

Eine weitere Möglichkeit besteht darin, daß zwischen der Intensität der vom Sensor empfangenen (Echo-)signale und der Häufigkeit der zum Steuergerät weitergeschalteten (Echo-)signale unterschieden wird. Ein vom Sensor empfangenes (Echo-)signal führt nur dann zu einer Weiterschaltung am Steuergerät, wenn eine vorbestimmte (analoge) Intensitätsschwelle überschritten wird - die Auswertung erfolgt in der Elektronik.

Die Schwelle ist hierbei fest im Sensor eingestellt und unabhängig vom normalen Meß- und besonderem Prüfmodus. Für die Störungsbestimmung hingegen ist ausschließlich die Häufigkeit der vom Sensor (analoge Verarbeitung mit anschließender Analog/Digital-Wandlung) zum Steuergerät (rein digitale Verarbeitung) weitergeschalteten Echosignale maßgeblich. Eine Störung liegt dann vor, wenn eine vorbestimmte Häufigkeitsschwelle unterschritten wird. Dabei ist zweckmäßigerweise nicht nur ein einzelner Sensor der bestimmende Faktor, sondern die Kombination der Einzelergebnisse mehrerer Sensoren. Die Auswertung erfolgt dabei in der Software.

Im Innenraum des Kraftfahrzeuges ist eine Warnvorrichtung vorgesehen, die es ermöglicht, den Benutzers vor einer bestimmten Störung zu warnen, z.B. mittels einer roten Warnleuchte.

Fig. 4 zeigt eine schematische Darstellung der Ultraschall-Abstandserfassungsvorrichtung nach Fig. 1 in einem zweiten Beispiel für einen Prüfmodus.

Um den gewünschten Effekt, d.h. das im Sensor S2 emfangene Übersprechsignal, zu verstärken, wird gemäß diesem zweiten Beispiel ein spezieller Prüfmodus verwendet, in dem Sendeimpulse des Sensors S1 und S3 derart generiert werden, daß die durch Übersprechen in dem Empfangssensor S2 eintreffenden Echosignale in ihrer Intensität verstärkt werden, also man die Sendeimpulse zeitmäßig derart festlegt, daß an dem Empfangssensor S2 die Übersprechimpulse U12 und U32 gleichzeitig eintreffen.

Die Zuverlässigkeit der erfindungsgemäßen Analyse des Übersprechens läßt sich also dadurch verstärken, daß die von mehreren Sensoren, beispielsweise Sensor S1 und S3, emittierten Sendeimpulse in Abhängigkeit von den jeweiligen Sensorabständen zeitlich so koordiniert werden, daß sie etwa zeitgleich im Empfangssensor, hier Sensor S2, eintreffen.

Dabei kann es sowohl zu einer Abschwächung bzw. Auslöschung der Pulssignale als auch zu einer Verstärkung kommen, und zwar je nach Phasenlage der am Ort des Sensors S2 gegenläufigen Signalfrequenzen. Stochastisch bzw. statistisch gesehen, kommt es jedoch oft genug zu einer Verstärkung, und dieser Effekt resultiert daher in einer insgesamt relativ noch sichereren Übersprecherfassung im Empfangssensor S2 mit einem sehr guten Signal/Rausch-Verhältnis.

Das in Fig. 3 und 4 dargestellte Prinzip kann entsprechend für die Sensoren S3 und S4 sowie evtl. vorhandene weitere Sensoren übertragen und gleichzeitig angewendet werden.

Am Laboraufbau und am realen Fahrzeug konnte exemplarisch nachgewiesen werden, daß ein akustisches Übersprechen entlang des Stoßfängers in einem Betriebstemperaturbereich von -40°C bis +80°C unter Zuhilfenahme des oben beschriebenen Meßprinzips in ausreichendem Maße auftritt, sofern keine starke Verschmutzung vorliegt. Beim Ausbleiben dieser Signale über einen definierten Zeitraum kann mit ausreichender Zuverlässigkeit auf einen Systemausfall bzw. auf eine erhebliche Reduzierung der Systemfunktionstüchtigkeit infolge des Erblindens hingewiesen werden.

Obwohl die vorliegende Erfindung vorstehend anhand eines bevorzugten Ausführungsbeispiels beschrieben wurde, ist sie darauf nicht beschränkt, sondern auf vielfältige Weise modifizierbar.

Selbstverständlich läßt sich das erfindungsgemäße Funktionsprinzip auf das System mit einer beliebigen Anzahl von Sensoren größer als 1 anwenden und ist nicht auf die gezeigten vier Sensoren beschränkt.

Anstelle von Ultraschall können auch Mikrowellen oder sonstige geeignete Strahlungen verwendet werden. Die Erfindung läßt sich prinzipiell auf alle System übertragen, die eine gegenzeitige Rückkopplung der zu überwachenden Einzelkomponenten aufweisen.

## Patentansprüche

1. Abstandserfassungsvorrichtung zur Erfassung des Abstands von Objekten (O) anhand von Wellensignalen, die von der Abstandserfassungsvorrichtung emittiert und von den Objekten (O) reflektiert werden, mit:
einer Sende/Empfangseinrichtung (S1-S4) zum Senden und Empfangen von den Wellensignalen mit mindestens einer ersten und zweiten räumlich voneinander beabstandeten Sende- und/oder Empfangseinheit, von denen die erste zumindest eine Sendefunktion und die zweite zumindest eine Empfangsfunktion aufweist;
wobei die beiden Einheiten derart gestaltet sind, daß die zweite Einheit die von der ersten Einheit emittierten Wellensignale als Übersprechsignale empfangen kann und wobei entweder die erste Einheit oder die zweite Einheit die von der ersten Einheit emittierten Wellensignale als Reflexionssignale empfangen kann;
und mit einer Störungsbestimmungseinrichtung zum Ermitteln mindestens eines charakteristischen Parameters der in der zweiten Einheit empfangenen Übersprechsignale und zum Bestimmen einer Störung basierend auf dem ermittelten charakteristischen Parameter.

2. Abstandserfassungsvorrichtung nach Anspruch 1, **dadurch gekennzeichnet, daß** die Störungsbestimmungseinrichtung derart gestaltet ist, daß sie die Intensität der in der zweiten Einheit empfangenen Übersprechsignale ermittelt und eine Störung bestimmt, wenn die ermittelte Intensität eine vorbestimmte Schwelle unterschreitet.

3. Abstandserfassungsvorrichtung nach Anspruch 1, **dadurch gekennzeichnet, daß** die Störungsbestimmungseinrichtung derart gestaltet ist, daß sie die Häufigkeit der in der zweiten Einheit empfangenen Übersprechsignale ermittelt und eine Störung bestimmt, wenn die ermittelte Häufigkeit eine vorbestimmte Schwelle unterschreitet.

4. Abstandserfassungsvorrichtung nach Anspruch 1, 2 oder 3, **dadurch gekennzeichnet, daß** eine Warnvorrichtung zum Warnen des Benutzers vor einer bestimmten Störung vorgesehen ist.

5. Abstandserfassungsvorrichtung nach einem der vorhergehenden Ansprüche, **dadurch gekennzeichnet, daß** die Sende/Empfangseinrichtung (S1-S4) eine dritte, von der ersten und zweiten räumlich beabstandete Sende- und/oder Empfangseinheit mit zumindest einer Sendefunktion aufweist;
wobei die drei Einheiten derart gestaltet sind, daß die zweite Einheit die von der ersten und dritten Einheit emittierten Wellensignale gleichzeitig als Übersprechsignale empfangen kann.

6. Abstandserfassungsvorrichtung nach Anspruch 5, **dadurch gekennzeichnet, daß** die erste und die dritte Einheit unterschiedliche räumliche Abstände zur zweiten Einheit aufweisen und eine Koordinationseinrichtung vorhanden ist, welche derart gestaltet ist, daß sie die Sendefunktion der ersten und dritten Einheit zeitlich so koordiniert, daß die Übersprechsignale gleichzeitig bei der zweiten Einheit eintreffen.

7. Abstandserfassungsvorrichtung nach einem der vorhergehenden Ansprüche, **dadurch gekennzeichnet, daß** die Wellen Ultraschallwellen sind.

## Claims

1. Distance-detection device for detecting the distance between objects (0) by means of wave signals which are emitted by the distance-detection device and reflected by the object (O), having:
a transceiver device (S1-S4) for transmitting and receiving the wave signals of at least one first and second transmitter unit and/or receiver unit which are spaced apart from one another spatially, the first of which has at least a transmission function and the second of which has at least a reception function;
wherein the two units are configured in such a way that the wave signals emitted by the first unit can be received by the second unit as crosstalk signals, and wherein the wave signals emitted by the first unit can be received as reflection signals either by the first unit or the second unit;
and having a fault-determining device for determining at least one characteristic parameter of the crosstalk signals which are received in the second unit and for determining a fault on the basis of the detected characteristic parameter.

2. Distance-detection device according to Claim 1, **characterized in that** the fault-determining device is configured in such a way that it detects the intensity of the crosstalk signals received in the second unit and determines a fault if the detected intensity drops below a predetermined threshold.

3. Distance-detection device according to Claim 1, **characterized in that** the fault-determining device is configured in such a way that it detects the frequency of the crosstalk signals received in the second unit and determines a fault if the detected frequency drops below a predetermined threshold.

4. Distance-detection device according to Claim 1, 2 or 3, **characterized in that** a warning device for warning the user about a specific fault is provided.

5. Distance-detection device according to one of the preceding claims, **characterized in that** the transceiver device (S1-S4) has a third transmitter unit and/or receiver unit which is spaced apart spatially from the first and second transmitter and/or receiver unit and has at least one transmission function; wherein the three units are configured in such a way that the wave signals emitted by the first and third units can be simultaneously received by the second unit as crosstalk signals.

6. Distance-detection device according to Claim 5, **characterized in that** the first and the third units are at different spatial distances from the second unit and a coordination device is present which is configured in such a way that it coordinates the transmission function of the first and third units chronologically in such a way that the crosstalk signals arrive simultaneously at the second unit:

7. Distance-detection device according to one of the preceding claims, **characterized in that** the waves are ultrasonic waves.

## Revendications

1. Dispositif de détection de distance pour détecter la distance d'objets (O) à l'aide de signaux d'ondes émis par le dispositif de détection de distance et réfléchis par les objets (O), comprenant :
- un dispositif d'émission/de réception (S1-S4) pour émettre et recevoir les signaux d'ondes avec au moins une première et une deuxième unités d'émission et/ou de réception distancées l'une de l'autre dans l'espace, dont la première présente au moins une fonction d'émission et la deuxième au moins une fonction de réception ;
- les deux unités étant conçues de manière à ce que la deuxième unité peut recevoir les signaux d'ondes émis par la première unité comme signaux diaphoniques, et soit la première unité soit la deuxième unité peut recevoir les signaux d'ondes émis par la première unité comme signaux réfléchis ; et
- un dispositif de détermination de perturbations pour définir au moins un paramètre caractéristique des signaux diaphoniques reçus dans la deuxième unité et pour déterminer une perturbation basée sur le paramètre caractéristique défini.

2. Dispositif de détection de distance selon la revendication 1,
**caractérisé en ce que**
le dispositif de détermination de perturbations est conçu de manière à définir l'intensité des signaux diaphoniques reçus dans la deuxième unité et à déterminer une perturbation lorsque l'intensité définie est inférieure à un seuil prédéterminé.

3. Dispositif de détection de distance selon la revendication 1,
**caractérisé en ce que**
le dispositif de détermination de perturbations est conçu de manière à définir le fréquence des signaux diaphoniques reçus dans la deuxième unité et à déterminer une perturbation lorsque la fréquence définie est inférieure à un seuil prédéterminé.

4. Dispositif de détection de distance selon la revendication 1, 2 ou 3,
**caractérisé en ce qu'**
un dispositif d'alarme est prévu pour avertir l'utilisateur d'une perturbation déterminée.

5. Dispositif de détection de distance selon l'une quelconque des revendications précédentes,
**caractérisé en ce que**
le dispositif d'émission/de réception (S1-S4) présente une troisième unité d'émission et/ou de réception distancée dans l'espace par rapport à la première et la deuxième, avec au moins une fonction d'émission ; les trois unités étant conçues pour que la deuxième unité puisse recevoir simultanément comme signaux diaphoniques les signaux d'ondes émis par la première et la troisième unités.

6. Dispositif de détection de distance selon la revendication 5,
**caractérisé en ce que**
la première et la troisième unité présentent des distances spatiales différentes par rapport à la deuxième unité, et un dispositif de coordination est conçu pour coordonner dans le temps la fonction d'émission des première et troisième unités de telle sorte que les signaux diaphoniques arrivent en même temps dans la deuxième unité.

7. Dispositif de détection de distance selon l'une quelconque des revendications précédentes,
**caractérisé en ce que**
les ondes sont des ultrasons.
